# EUROPÄISCHE PATENTANMELDUNG

(11) **EP 0 553 611 A2**
(43) Veröffentlichungstag der Anmeldung: **04.08.1993**
(21) Anmeldenummer: 93100095.4
(22) Anmeldetag: 06.01.1993
(51) Int. Cl.: B30B 9/04, C12G 1/00

(54) **Behälter und Verfahren zum Behandeln von Maische**

(30) Priorität: 16.01.1992 DE 4200975
(71) Anmelder: Rieger, Herbert, D-74379 Ingersheim (DE)
(72) Erfinder: Rieger, Herbert, D-74379 Ingersheim (DE)
(74) Vertreter: Witte, Alexander, Dr.-Ing.

(57) **Zusammenfassung**

Ein Behälter (10) und ein Verfahren dienen zum Behandeln von Maische (71). Der Behälter (10) weist einen Maischeraum (30) und mindestens einen von dem Maischeraum (30) mittels eines Siebes (21, 26) getrennten Saftraum (23, 28) auf. Das Sieb (21, 26) ist im wesentlichen vertikal angeordnet und der Maischeraum (30) ist prismatisch ausgebildet. Ein Preßgewicht (60), dessen horizontaler Querschnitt im wesentlichen dem horizontalen Querschnitt des Maischeraums (30) entspricht, ist in den Maischeraum (30) in vertikaler Richtung (85) verfahrbar.

## Beschreibung

Die Erfindung betrifft einen Behälter zum Behandeln von Maische mit einem Maischeraum und mindestens einem von dem Maischeraum mittels eines Siebes getrennten Saftraum, wobei das Sieb im wesentlichen vertikal angeordnet und der Maischeraum zylindrisch ausgebildet ist.

Die Erfindung betrifft ferner ein Verfahren zum Behandeln von Maische, bei dem die Maische in einen Behälter mit einem Maischeraum und mindestens einem von dem Maischeraum mittels eines Siebes getrennten Saftraum eingefüllt wird, wobei das Sieb im wesentlichen vertikal angeordnet und der Maischeraum zylindrisch ausgebildet ist.

Ein Behälter und ein Verfahren der vorstehend genannten Art sind Gegenstand der älteren deutschen Patentanmeldung P 40 35 228 sowie der älteren internationalen Patentanmeldung PCT/DE 91-00852 desselben Anmelders. Durch diesen Hinweis wird der Offenbarungsgehalt der beiden vorstehend genannten älteren Patentanmeldungen auch zum Offenbarungsgehalt der vorliegenden Anmeldung gemacht.

Der bekannte Behälter ist von stehend-zylindrischer Gestalt und im wesentlichen rotationssymmetrisch zu einer Vertikalachse. In dem Behälter befinden sich eine innere, zylindrische sowie eine äußere, ebenfalls zylindrische Siebwand, die konzentrisch zur Vertikalachse angeordnet sind. Auf diese Weise entsteht ein torusförmiger Maischeraum, an den innen und außen jeweils ein Saftraum grenzt, wobei der innere Saftraum von zylindrischer und der äußere Saftraum von hohlzylindrischer Gestalt ist. Auf diese Weise wird erreicht, daß der Weg des Saftes vom Maischeraum in den Saftraum möglichst kurz ist, weil der Maischeraum, wie erwähnt, sowohl innen wie auch außen durch einen Saftraum begrenzt wird.

Auf diese Weise ist es möglich, Weinmaische allein aufgrund ihres Eigengewichtes bereits weitgehend zu entsaften.

Der bekannte Behälter ist weitgehend ein Einzweckbehälter, der zum Entsaften von Maische, insbesondere Weinmaische eingesetzt werden kann.

Der Erfindung liegt demgegenüber die Aufgabe zugrunde, einen Behälter der eingangs genannten Art dahingehend weiterzubilden, daß er für eine größere Anzahl von Anwendungen einsetzbar ist.

Diese Aufgabe wird bei einem Behälter der eingangs genannten Art erfindungsgemäß dadurch gelöst, daß ein schweres Preßgewicht, dessen horizontaler Querschnitt im wesentlichen dem horizontalen Querschnitt des Maischeraums entspricht, in dem Maischeraum in vertikaler Richtung lose verfahrbar ist.

Die Aufgabe wird ferner gemäß dem eingangs genannten Verfahren erfindungsgemäß dadurch gelöst, daß ein schweres Preßgewicht, dessen horizontaler Querschnitt im wesentlichen dem horizontalen Querschnitt des Maischeraums entspricht, lose in den Maischeraum in vertikaler Richtung eingefahren wird.

Die der Erfindung zugrundeliegende Aufgabe wird auf diese Weise vollkommen gelöst.

Das Vorsehen eines Preßgewichtes hat nämlich den Vorteil, daß der erfindungsgemäße Behälter nicht nur zum Vorentsaften, sondern auch zum vollständigen Entsaften und sogar zum anschließenden Auspressen der Maische-Festbestandteile verwendet werden kann, wenn das Preßgewicht unter Schwerkrafteinfluß mit seinem Eigengewicht lose auf der Maische aufliegt bzw. in diese eintaucht. Auch eröffnet das Vorsehen des Preßgewichtes die Möglichkeit, Rotweinmaische im Maischegärverfahren in dem Behälter zu bearbeiten, weil das Preßgewicht auch zum Niederhalten der Tresterbestandteile im Traubensaft dienen kann und darüberhinaus auch einsetzbar ist, um die Maische zu agitieren.

Die der Erfindung zugrundeliegende Aufgabe wird daher vollkommen gelöst, weil im Gegensatz zu dem Behälter und dem Verfahren der eingangs genannten Art eine größere Vielfalt von Anwendungsmöglichkeiten eröffnet wird. Die Erfindung unterscheidet sich damit auch von bekannten Pressen, z.B. Spindelpressen, bei denen durch eine Übersetzung eine Preßkraft auf die Maische ausgeübt wird.

Bei einer bevorzugten Weiterbildung des erfindungsgemäßen Behälters ist der horizontale Querschnitt kreisringförmig.

Diese Maßnahme hat den Vorteil, daß in der bereits erwähnten Weise sehr kurze Saftwege zwischen Maischeraum und Saftraum entstehen.

Bei anderen Ausführungsbeispielen der Erfindung ist der horizontale Querschnitt kreisförmig.

Diese Maßnahme hat den Vorteil, daß ein einfacherer Aufbau mit nur einer zylindrischen Siebwand entsteht.

Bei weiteren Ausführungsbeispielen der Erfindung ist das Preßgewicht ein mit Füllmaterial gefüllter Hohlkörper.

Diese Maßnahme hat den Vorteil, daß das Preßgewicht zunächst als leichter Hohlkörper transportiert werden kann und erst am Einsatzort durch Befüllen mit dem Füllmaterial sein Endgewicht erhält.

Alternativ dazu kann der Preßkörper aber auch ein schwerer homogener Körper, z.B. ein Stein, sein.

Bei Weiterbildungen dieses Ausführungsbeispiels ist das Preßgewicht mittels Seilen in den Maischeraum absenkbar.

Diese Maßnahme hat den Vorteil, daß ein weitgehend automatisierter Betrieb möglich wird, wenn das Preßgewicht mittels eines Kranes oder dgl. abgesenkt wird. Auch sind dann große Arbeitsgeschwindigkeiten möglich, weil mittels Kränen oder dgl. das Preßgewicht je nach Wunsch schnell oder langsam verfahren werden kann.

Bei einer Weiterbildung dieses Ausführungsbeispiels ist in den Seilen ein Kraftsensor angeordnet.

Diese Maßnahme hat den Vorteil, daß das Preßgewicht fein dosiert werden kann, und zwar unabhängig davon, ob sich das Preßgewicht in Umgebungsluft befindet oder ganz oder teilweise eingetaucht ist, weil der Kraftsensor in den Seilen den Auftrieb des Preßgewichtes in der Maische berücksichtigt.

Bei weiteren Varianten dieses Ausführungsbeispiels laufen die Seile durch Öffnungen eines Deckels des Behälters.

Diese Maßnahme hat den Vorteil, daß die Maische in geschlossener Atmosphäre behandelt werden kann, wie dies vor allem bei Langzeitbehandlung, beispielsweise der Maischegärung, gewünscht und erforderlich ist, um ein Verderben der Maische zu verhindern.

Bei einer Weiterbildung dieser Variante sind in den Seilen Mitnehmer angeordnet, deren Querschnitt größer als der Querschnitt der Öffnungen ist.

Diese Maßnahme hat den Vorteil, daß beim Anheben des Preßgewichtes die Mitnehmer in Anlage an die Unterseite des Deckels kommen und diesen anheben und mitnehmen, während im übrigen auf den Behälter aufgesetztem Deckel das Preßgewicht beliebig nach unten abgesenkt werden kann, weil dann die Seile in den Öffnungen frei laufen.

Bei Varianten dieses Ausführungsbeispiels ist bevorzugt, wenn die Seile in den Öffnungen im wesentlichen gasdicht geführt sind.

Diese Maßnahme hat den Vorteil, daß bei Behandlung im geschlossenen Behälter die Atmosphäre im Behälter, insbesondere die CO₂-Atmosphäre erhalten bleibt und kein für die Maische schädlicher Umgebungssauerstoff in den Behälter gelangen kann.

Es wurde bereits erwähnt, daß mit dem erfindungsgemäßen Behälter eine Vielzahl von Behandlungsmöglichkeiten eröffnet wird.

Bei einer ersten Variante des erfindungsgemäßen Verfahrens wird daher während des Einfahrens die Saftkammer entleert.

Diese Maßnahme hat den Vorteil, daß der erfindungsgemäße Behälter als Presse genutzt werden kann, weil beim Einfahren bzw. Absenken des Preßgewichtes die Maische im Maischeraum zunehmend gepreßt wird und der Saft durch die Siebwand in den Saftraum gelangt und dort sogleich abfließt.

Bei einer anderen Variante des erfindungsgemäßen Verfahrens wird bei nicht-entleerter Saftkammer das Preßgewicht so weit in den Maischeraum eingefahren, daS seine Unterseite sich unterhalb des Spiegels der eingefüllten Maische befindet.

Diese Maßnahme hat den Vorteil, daS zum Beispiel bei der Behandlung von Rotweinmaische eine Maischegärung möglich wird, weil die gegenüber Luftsauerstoff besonders empfindlichen Tresterbestandteile durch das Preßgewicht nach Art eines Senkbodens im Traubensaft gehalten werden.

Schließlich ist bei einer dritten Variante des erfindungsgemäßen Verfahrens möglich, bei nicht-entleerter Saftkammer das Preßgewicht zunächst einzufahren und dann wieder auszufahren.

Diese Maßnahme hat den Vorteil, daS eine Maischebewegung bzw. Maischedurchflutung möglich wird. Beim Absenken des Preßgewichtes wird nämlich die Maische zunächst ausgepreßt, so daß der Traubensaft aus der Maische seitlich in den Saftraum entweicht. Beim Wiederanheben bzw. Ausfahren des Preßgewichtes wird demgegenüber der Traubensaft wieder in den Maischeraum eingesaugt, so daß die Festbestandteile der Maische wieder expandieren und Traubensaft aufnehmen können. Wenn man dies periodisch wiederholt, so wird die Maische bei jedem Absenken und Wieder-Anheben des Preßgewichtes kräftig durchflutet. Auf diese Weise können die roten Farbstoffe aus den Traubenschalen der Rotweinmaische optimal herausgelöst werden.

Bei alledem ist von Vorteil, daß das Einfahren bzw. Ausfahren des Preßgewichtes ein mechanisch sehr einfach handhabbarer Vorgang ist, der mit handelsüblichen Kränen oder sonstigem Hebezeug leicht ausgeführt werden kann. Es bedarf daher keiner komplizierten Rührwerke oder drehbarer Maischebehälter und es kann ein- und derselbe Behälter auf verschiedene Weisen genutzt werden.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine seitliche Schnittdarstellung durch ein Ausführungsbeispiel eines erfindungsgemäßen Behälters;
- Fig. 2: eine Darstellung, ähnlich Fig. 1, jedoch mit weiteren Einzelheiten der Erfindung;
- Fig. 3: eine Prinzipdarstellung zur Erläuterung des erfindungsgemäßen Behälters in einer Funktion als Maischepresse;
- Fig. 4: eine Darstellung, ähnlich Fig. 3, jedoch zur Erläuterung der Funktion des Behälters bei einer Maischegärung;
- Fig. 5 und 6: Darstellungen, ähnlich Fig. 4, jedoch zur Erläuterung der Funktion des Behälters, bei der Maische agitiert wird.

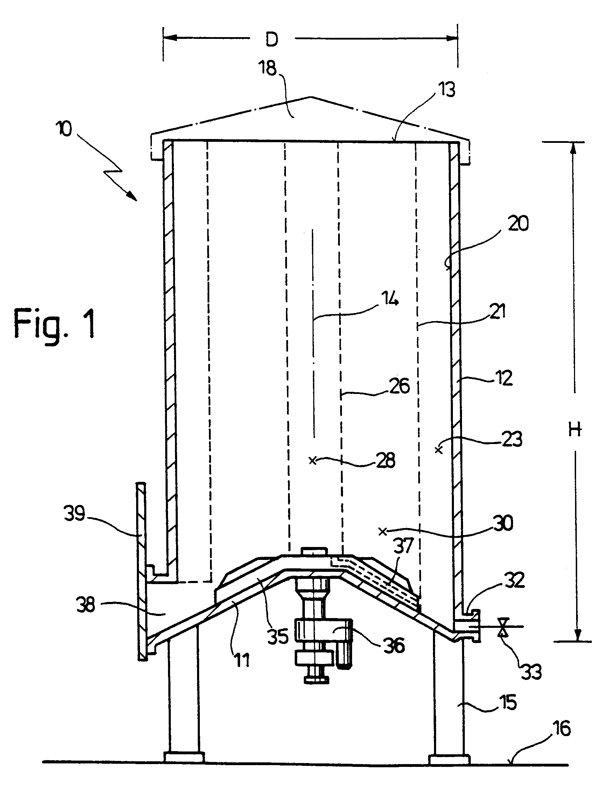

In Fig. 1 bezeichnet 10 insgesamt einen Maischebehälter, wie er vorzugsweise für die Behandlung von Weinmaische eingesetzt werden kann. Es versteht sich jedoch, daS der Behälter 10 ebenso wie die weiteren, später noch zu schildernden Ausführungsbeispiele der Erfindung, auch zum Entsaften anderer Gemische von Flüssigkeiten und Feststoffen eingesetzt werden können. Dabei ist primär an andere Maischen, beispielsweise Obst- oder Beerenmaischen, zu denken. Die Erfindung ist jedoch auch in anderen Bereichen der Lebensmittelindustrie einsetzbar, beispielsweise zum Herstellen von Gelatine oder zum Herstellen von Auszügen aus pflanzlichen oder tierischen Ausgangsmaterialien, wie auch Anwendungen in der Umwelttechnik, beispielsweise zum Klären von Abwässern möglich sind.

Im folgenden soll jedoch die Erfindung, ohne daß dies den Anwendungsbereich einschränkt, anhand des Anwendungsbeispiels von Weinmaischen erläutert werden.

Der Behälter 10 in Fig. 1 ist von stehend-zylindrischer und zunächst oben offener Bauart. Ein Boden 11 des Behälters 10 ist nach innen gewölbt ausgestaltet, beispielsweise in Form eines Konus, einer Kugelkappe oder eines nach innen gelegten Klöpperbodens.

An den Boden 11 schließt sich ein zylindrischer Mantel 12 an, der bis zu einer offenen Oberseite 13 des Behälters 10 durchgeht. Insgesamt ist der Behälter 10 damit von im wesentlichen rotationssymmetrischer Bauart mit einer Hochachse 14.

Über nur schematisch angedeutete Füße 15 ist der Behälter 10 auf einem Fundament 16 abgestützt.

Die offene Oberseite des Behälters 10 kann mit einem Deckel 18 abgeschlossen sein, wie dies weiter unten noch im einzelnen erläutert werden wird.

Betrachtet man den Beispielsfall der Behandlung von Weinmaische, so kann der Behälter 10 eine Höhe H zwischen 1 und 15 m aufweisen, während der Außendurchmesser D vorzugsweise zwischen 1 und 5 m liegt. Wichtig bei Behältern der hier interessierenden Art ist das Verhältnis der Höhe H zum Durchmesser D, wobei dieses Verhältnis H/D zwischen 1 und 6, vorzugsweise zwischen 1,5 und 3 liegen kann. Die Behälter haben damit ein Fassungsvermögen zwischen beispielsweise 1.000 und 100.000 Litern oder noch darüber. Es darf an dieser Stelle festgehalten werden, daß die genannten Werte nur bevorzugte Bereiche darstellen und daß Abweichungen nach oben und nach unten selbstverständlich möglich sind, ohne daß dies den Rahmen der vorliegenden Erfindung sprengt.

Ferner versteht sich, daS der Behälter 10 samt Zubehör aus Edelstahl, Kunststoff oder auch aus Holz bestehen kann. Ferner können an sich bekannte Temperiervorrichtungen vorgesehen werden.

Der Mantel 12 hat eine zylindrische Innenseite 20, zu der konzentrisch im Abstand eine erste Siebwand 21 angeordnet ist. Eine zweite Siebwand 26 ist von stehend-zylindrischer Gestalt und befindet sich konzentrisch zur Hochachse 14. Die zweite Siebwand 26 ist ebenfalls oben offen. Die zweite Siebwand 26 umgrenzt damit einen zweiten Saftraum 28 von zylindrischer Gestalt.

Zwischen dem außenliegenden ersten, torusförmigen Saftraum 23 und dem inneren zweiten, zylindrischen Saftraum 28 befindet sich somit ein ebenfalls torusförmiger bzw. hohlzylindrischer Zwischenraum, der als Maischeraum 30 dient.

Im Rahmen der vorliegenden Erfindung ist es im wesentlichen gleichgültig, ob der Maischeraum 30 von einem oder von zwei Safträumen 23, 28 eingeschlossen wird. Wichtig ist allein, daß der Maischeraum 30 von in vertikaler Richtung prismatischer Gestalt ist, d.h., daß seine horizontale Querschnittsfläche sich in der Vertikalen nicht ändert.

In Fig. 1 ist ferner mit 32 ein Ablaufstutzen angedeutet, der mit einem Ablaufventil 33 versehen ist. Der Ablaufstutzen 32 befindet sich selbstverständlich am tiefsten Punkt des Saftraumes 23, um eine vollständige Entleerung zu ermöglichen.

Am Boden 11 des Behälters 10 befindet sich ein Ausräumflügel 35, der mittels eines Getriebemotors 36 angetrieben wird. Im Ausräumflügel 35 kann eine Leitung 37 angeordnet sein, die den inneren Saftraum 28 mit dem äußeren Saftraum 23 verbindet, so daß der innere Saftraum 28 über den äußeren Saftraum 23 entleert werden kann. Alternativ oder zusätzlich ist aber auch möglich, den inneren Saftraum 28 unmittelbar zu entleeren, beispielsweise dadurch, daß die Welle des Getriebemotors 36 als Hohlwelle ausgebildet wird.

Der Behälter 10 ist ferner mit einem Ausräumstutzen 38 versehen, der mittels eines Schiebers 39 verschließbar ist.

Weitere Einzelheiten des Behälters 10 sind den bereits eingangs erwähnten älteren Patentanmeldungen zu entnehmen, nämlich der älteren deutschen Patentanmeldung P 40 35 228 sowie der älteren internationalen Patentanmeldung PCT/DE 91/00852 desselben Anmelders. Auf den Offenbarungsgehalt dieser beiden älteren Patentanmeldungen wird ausdrücklich Bezug genommen.

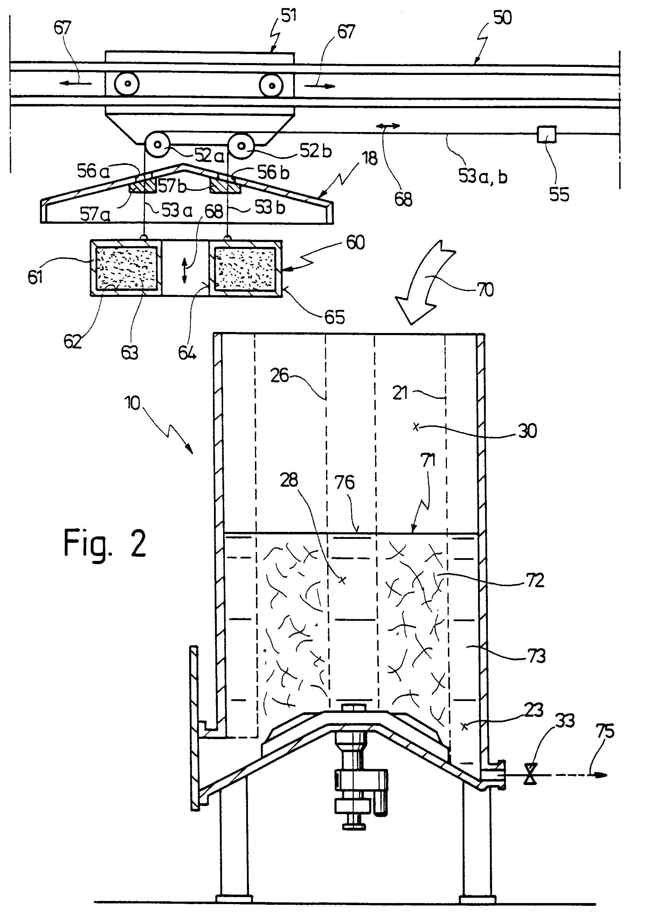

In Fig. 2 ist oberhalb des insoweit unveränderten Behälters 10 gemäß Fig. 1 eine Kranbahn 50 zu erkennen, auf der eine Laufkatze 51 läuft. An der Unterseite der Laufkatze 51 sind Rollen 52a, 52b vorgesehen, über die Seile 53a, 53b laufen. In den Seilen 53a, 53b können Kraftsensoren 55 eingebaut sein, um die Zugkraft in den Seilen 53a, 53b zu messen. Die Kraftsensoren 55 sind mit einem in Fig. 2 nicht dargestellten Steuergerät verbunden, über das die Bewegung der Seile 53a, 53b steuerbar ist.

Die Seile 53a, 53b laufen durch Öffnungen 56 im Deckel 18. Sie sind unterhalb des Deckels 18 mit Mitnehmern 57a, 57b versehen, deren Querschnitt größer ist als der Innenquerschnitt der Öffnungen 56a, 56b. Auf diese Weise liegt der Deckel 18 in der in Fig. 2 dargestellten Position auf den Mitnehmern 57a, 57b auf und wird in der Vertikalen gehalten.

An den Seilen 53a, 53b hängt ein schweres Preßgewicht 60. Das Preßgewicht 60 ist vorzugsweise ein torusförmiger Hohlkörper 61, dessen Innenraum 62 mit einem geeigneten Füllmaterial 63 ausgefüllt ist. Das Füllmaterial 63 kann beispielsweise Sand oder Metallspäne sein. Als Preßgewicht kann alternativ auch ein Stein eingesetzt werden, wenn, z.B. in Verbindung mit einem Behälter aus Holz, natürliche Werkstoffe bevorzugt werden.

Der torusförmige Hohlkörper 61 hat einen zentralen Durchgang 64, dessen Innendurchmesser etwas größer ist als der Außendurchmesser der zweiten Siebwand 26. Ein Umfang 65 des Preßgewichtes 60 hat hingegen einen Außendurchmesser, der etwas kleiner ist als der Innendurchmesser der ersten Siebwand 21.

Durch diese Dimensionierung paßt das Preßgewicht 60 gerade in den torusförmigen Maischeraum 30 und ist aufgrund dessen zylindrischer Gestalt dort auch in vertikaler Richtung verfahrbar.

Mittels des bereits erwähnten Steuergerätes kann die Laufkatze 51 in Richtung der Pfeile 67 in horizontaler Richtung verfahren werden und durch Betätigen einer in der Fig. nicht dargestellten Winde können der Deckel 18 sowie das Preßgewicht 60 in Richtung von Pfeilen 68, d.h. in der Vertikalen, verfahren werden.

Die in Fig. 2 nur abgebrochen dargestellte Kranbahn 50 kann sich noch über weitere, in Fig. 2 nicht dargestellte Behälter sowie einen Ablageplatz für das Preßgewicht 60 und/oder den Deckel 18 erstrecken, damit z.B. mit einem gemeinsamen Preßgewicht 60 nacheinander in verschiedenen Behältern gearbeitet werden kann, wahrend die übrigen Behälter z.B. befüllt, entleert oder gereinigt werden.

Bei der in Fig. 2 dargestellten Stellung ist die Laufkatze 51 nach links verfahren, während gleichzeitig der Deckel 18 mit dem Preßgewicht 60 angehoben wurde, um einen Zugang zum Behälter 10 zu ermöglichen.

Mit einem Pfeil 70 ist angedeutet, daS in dieser Position der Behälter 10 bzw. dessen Maischeraum 30 mit Maische befüllt werden kann. Hierzu kann zum Beispiel ein üblicher Schlauch eingesetzt werden, der mittels einer Maischepumpe mit Maische beaufschlagt wird.

In Fig. 1 ist Maische mit 71 bezeichnet und man erkennt, daß Festbestandteile 72 der Maische 71 im Maischeraum 30 verbleiben, während Saft 73 der Maische 71 im wesentlichen durch die Siebwände 21 und 26 in die Safträume 23 und 28 übertritt.

Je nachdem, ob das Ablaufventil 33 geöffnet ist oder nicht, stellt sich ein Spiegel 76 der Maische 71 ein, der im Maischeraum 30 so hoch ist wie in den Safträumen 23, 28 (Ablaufventil 33 geschlossen) oder in den Safträumen 23, 28 niedriger liegt (Ablaufventil 33 geöffnet).

Mit dem in Fig. 1 und 2 dargestellten Behälter 10 können unterschiedliche Bearbeitungsvorgänge ausgeführt werden.

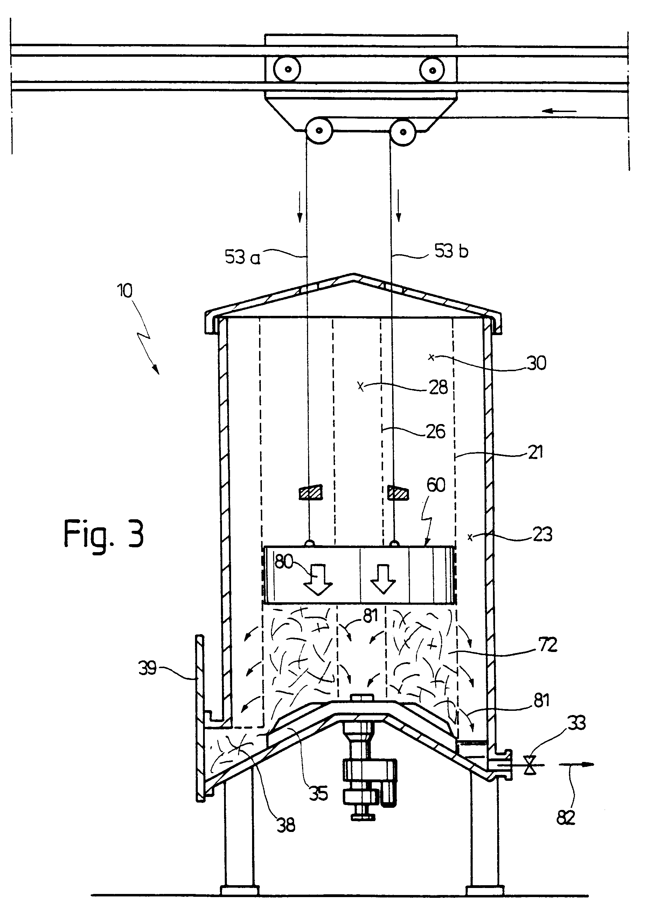

Fig. 3 zeigt einen ersten Anwendungsfall, bei dem der Behälter 10 als Presse eingesetzt wird. Dieser Einsatz als Presse kann entweder separat vorgesehen werden, indem in den Maischeraum 30 Preßgut eingefüllt wird. Es ist aber möglich, den Einsatz des Behälters 10 als Presse im Anschluß an einen Entsaftungsvorgang vorzusehen.

In jedem Fall wird man das Preßgewicht 60 im Maischeraum 30 absenken, wie mit Pfeilen 80 in Fig. 3 dargestellt. Man erkennt deutlich, daß die Festbestandteile 72 im Maischeraum 30 dabei zusammengepreßt werden, so daS der Saft, wie mit Pfeilen 81 angedeutet, durch die äußere Siebwand 21 in den äußeren Saftraum 23 sowie durch die innere Siebwand 26 in den inneren Saftraum 28 übertreten. Da das Ablaufventil 33 in diesem Falle geöffnet ist, tritt der Saft dort in Richtung eines Pfeiles 82 aus.

Bei diesem Einsatz des Behälters 10 wird das Preßgewicht 60 vollkommen nach unten abgesenkt, bis die Kraft in den Seilen 53a, 53b gleich Null oder sehr gering ist, so daß dann das gesamte Eigengewicht des Preßgewichtes 30 auf den Festbestandteilen 72 lastet und diese damit ausgepreßt werden.

Sobald der ganze Saft aus den Festbestandteilen 72 ausgetreten ist, kann das Preßgewicht 60 wieder angehoben werden, um die Festbestandteile 72 wieder zu entlasten. Der Ausräumflügel 35 wird dann in Drehung versetzt, der Schieber 39 wird geöffnet und die ausgepreßten Festbestandteile 72 können dann durch den Ausräumstutzen 38 entleert werden.

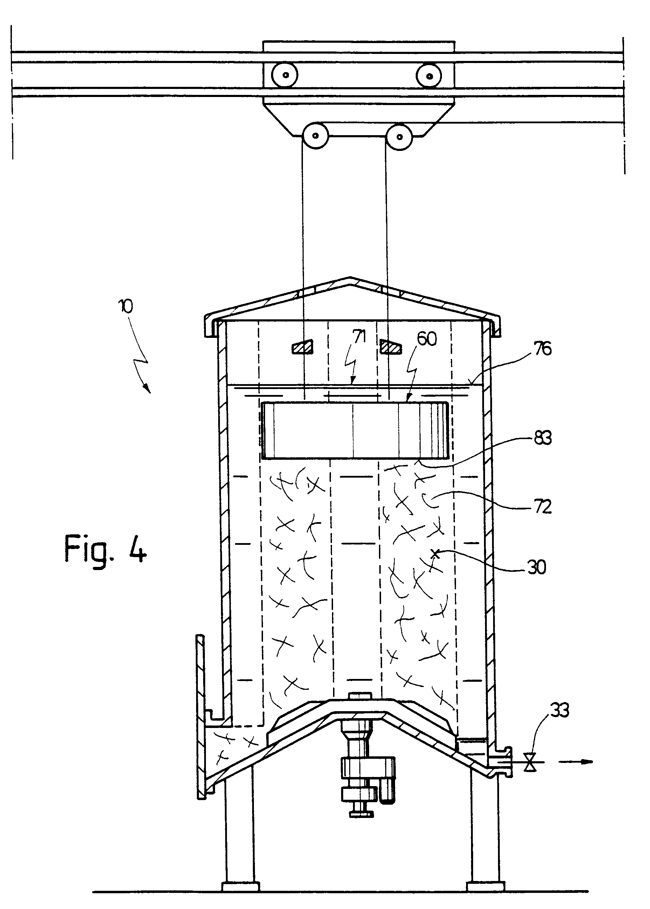

Fig. 4 zeigt einen anderen Einsatzfall des erfindungsgemäßen Behälters 10. Bei dem in Fig. 4 dargestellten Einsatzfall ist der Behälter 10 nämlich mit einer Maische 71 befüllt, die im Wege der Maischegärung bearbeitet werden soll. Die Maische 71 ist daher üblicherweise eine Rotweinmaische, kann aber auch eine Weißweinmaische sein.

In jedem Falle wird nach dem Einfüllen der Maische 71 das Preßgewicht 60 in den Maischeraum 30 behutsam eingefahren und zwar so weit, daß sich eine Unterseite 83 des Preßgewichtes 60 unterhalb des Spiegels 76 der Maische 71 befindet. Das Ablaufventil 33 ist dabei selbstverständlich geschlossen.

Auf diese Weise übt das Preßgewicht 60 die an sich bekannte Funktion eines sogenannten Senkbodens aus, wie man ihn bereits bei der klassischen Rotweinbereitung verwendet hat, um die sehr sauerstoffempfindlichen Festbestandteile 72 der Maische 71 unter der Oberfläche des Traubensaftes zu halten und damit dem Einfluß des Umgebungssauerstoffs zu entziehen.

Der in Fig. 4 dargestellte Zustand kann solange aufrecht erhalten werden, bis die Maische 71 in Gärung gerät und dann gärt.

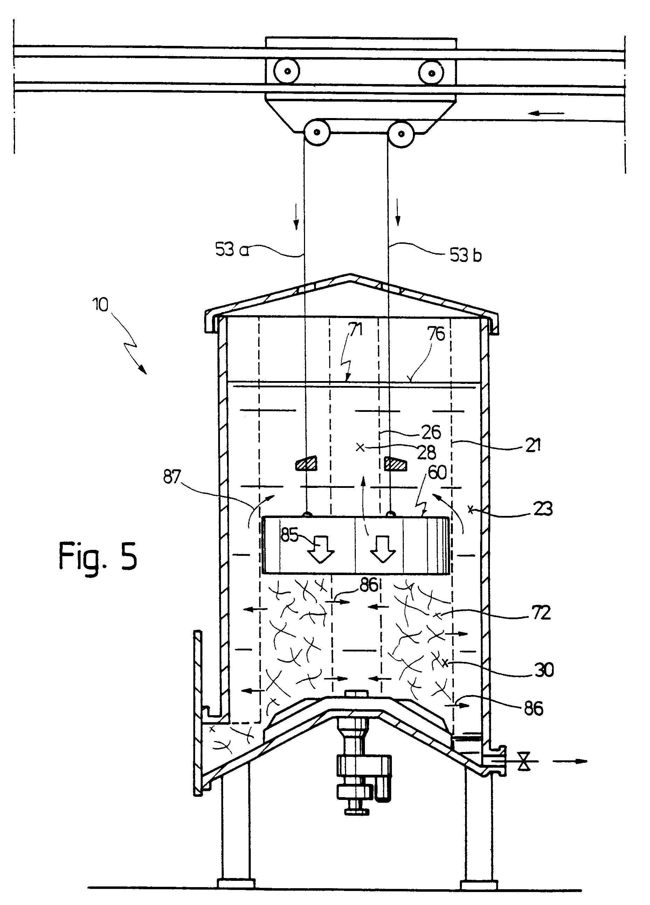

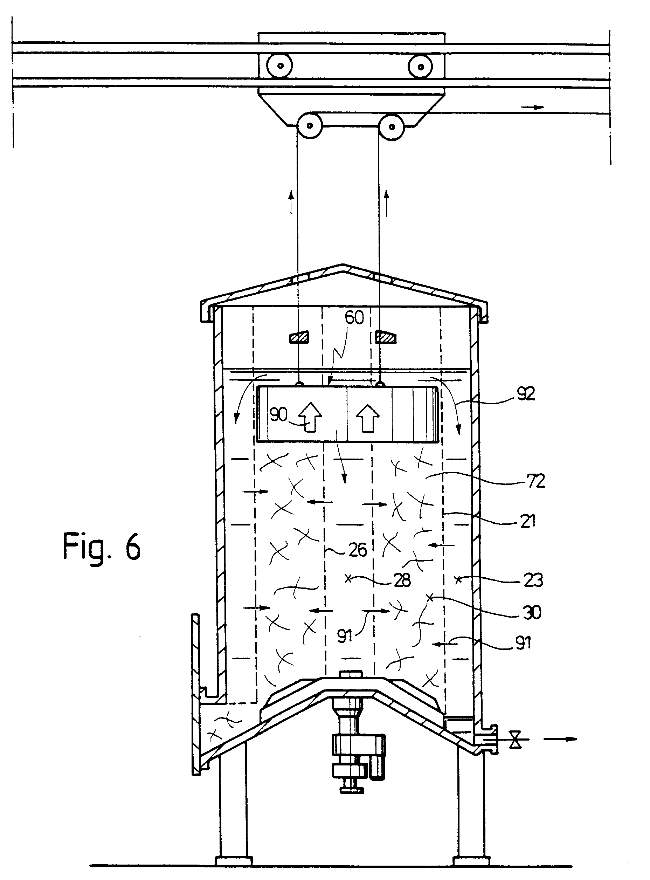

In den Fig. 5 und 6 ist eine weitere Verfahrensmöglichkeit dargestellt.

Hauptanwendungsfall des in Fig. 5 und 6 illustrierten Verfahrens ist wiederum die Maischegärung, insbesondere die Rotweinmaischegärung.

In Fig. 5 ist dargestellt, daß das Preßgewicht 60 bei eingefüllter Maische 71 in Richtung von Pfeilen 85 nach unten abgesenkt wird und zwar wesentlich weiter, als dies bei dem in Fig. 4 illustrierten Verfahren der Fall war.

Aufgrund der Absenkung des Preßgewichtes 60 werden die darunter befindlichen Festbestandteile 72 der Maische 71 zusammengepreßt. Dies hat zur Folge, daß der im Maischeraum 30 befindliche Traubensaft durch die Siebwände 21 und 26 durchtritt, wie mit Pfeilen 86 angedeutet. Ferner wird bewirkt, daß Traubensaft am Preßgewicht 60 vorbei nach oben strömt, wie mit Pfeilen 87 angedeutet.

Im Falle der Rotweinmaischegärung tritt damit Traubensaft aus dem Maischeraum 30 aus, der sich zuvor in innigem Kontakt mit den Traubenschalen befunden hatte und daher viel roten Farbstoff enthält.

Durch Einstellen der Kraft in den Seilen 53a, 53b bzw. der vertikalen Position des Preßgewichtes 60 kann das Ausmaß der Pressung auf die Festbestandteile 72 dosiert eingestellt werden.

Wenn das Preßgewicht 60 auf diese Weise seine untere Totpunktlage erreicht hat, kann es, wie Fig. 6 zeigt, erneut angehoben werden, wie mit Pfeilen 90 angedeutet.

Die Anhebung des Preßgewichtes 60 hat gegenüber der Vorgehensweise gemäß Fig. 5 gegensätzliche Wirkungen. Die Festbestandteile 72 im Maischeraum 30 können sich nämlich nun wieder entspannen und durch die Volumenvergrößerung im Maischeraum 30 unterhalb des Preßgewichtes 60 strömt Traubensaft aus den Safträumen 23 und 28 wieder in den Maischeraum 30 ein, wie mit Pfeilen 91 angedeutet. Auch der oberhalb des Preßgewichtes 60 befindliche Traubensaft strömt wieder nach unten, wie mit Pfeilen 92 angedeutet.

Dadurch, daß die Vorgänge gemäß den Fig. 5 und 6 entsprechend einer vorgegebenen Programmsteuerung periodisch wiederholt werden, können die Festbestandteile 72 der Maische 71 periodisch ausgepreßt und wieder entspannt werden, mit der Folge, daß Traubensaft periodisch aus der Maische austritt und wieder in sie eintritt.

Dies hat eine besonders effektive Durchspülung der Maische im Maischeraum 30 zur Folge und bei der Behandlung von Rotweinmaische werden auf diese Weise die roten Farbstoffe besonders gut aus den Traubenschalen gelöst.

Es versteht sich, daS die zuvor beschriebenen Ausführungsbeispiele in mannigfaltiger Hinsicht variiert werden können, je nachdem, wie dies im Einzelfall ratsam ist.

So ist es möglich, dem Behälter 10 eine andere Form zu verleihen, beispielsweise eine eckige oder eine ovale Querschnittsform und es können auch statt zweier Safträume 23 und 28 mit zwei Siebwänden 21 und 26 nur ein Saftraum mit einer Siebwand oder auch mehrere Safträume mit mehreren Siebwänden Verwendung finden.

Es ist ferner möglich, den erfindungsgemäßen Behälter sowie das erfindungsgemäße Verfahren auch bei anderen Ausgangsprodukten einzusetzen. Über den geschilderten Anwendungsfall der Behandlung von kalten Weinmaischen ist auch die Behandlung von warmen Weinmaischen, insbesondere von kurzzeit-hocherhitzten Rotweinmaischen möglich. Aber auch die Behandlung von Frucht- und Beerenmaischen ist möglich, insbesondere von solchen Maischen, die bei herkömmlichen Preßverfahren problematisch sind, beispielsweise Erdbeermaischen, die aufgrund ihrer schmierigen Konsistenz bei herkömmlichen Pressen zu Problemen führen.

Es sind ferner zahlreiche Varianten dadurch möglich, daß man das Verhältnis von Höhe H zu Durchmesser D geeignet wählt oder auch das Volumen der Safträume zum Volumen des Maischeraums oder der Maischeräume vorteilhaft auslegt. Dies gilt insbesondere dann, wenn einerseits ein kontinuierliches Ablassen des Saftes gewünscht wird (dann reichen relativ kleine Safträume aus), oder ob man das Ausgangsprodukt lange im Saft stehen lassen möchte (dann sind größere Safträume vorteilhaft).

Es wurde ferner bereits erwähnt, daß die Erfindung außerhalb des Bereiches der Behandlung von Wein- und Obst- oder Beerenmaischen auch bei ganz anderen Verwendungen einsetzbar ist, so zum Beispiel allgemein in der Lebensmittelindustrie, bei der Herstellung von Tees, Suppen oder von sonstigen Auszügen aus pflanzlichen oder tierischen Ausgangsmaterialien. Weiterhin läßt sich die Erfindung im Bereich der Umwelttechnik, bei der Abwasseraufbereitung, allgemein gesprochen überall dort einsetzen, wo Gemische aus Flüssigkeiten und Festbestandteilen zu bearbeiten sind.

## Patentansprüche

1. Behälter zum Behandeln von Maische mit einem Maischeraum (30) und mindestens einem von dem Maischeraum (30) mittels eines Siebes (21, 26) getrennten Saftraum (23, 28), wobei das Sieb (21, 26) im wesentlichen vertikal angeordnet und der Maischeraum (30) zylindrisch ausgebildet ist, dadurch gekennzeichnet, daß ein schweres Preßgewicht (60), dessen horizontaler Querschnitt im wesentlichen dem horizontalen Querschnitt des Maischeraums (30) entspricht, in dem Maischeraum (30) in vertikaler Richtung (80; 85; 90) lose verfahrbar ist.

2. Behälter nach Anspruch 1, dadurch gekennzeichnet, daß der horizontale Querschnitt kreisringförmig ist.

3. Behälter nach Anspruch 1, dadurch gekennzeichnet, daß der horizontale Querschnitt kreisförmig ist.

4. Behälter nach einem oder mehreren der Ansprüche 1 bis 3, dadurch gekennzeichnet, daS das Preßgewicht (60) ein mit Füllmaterial (63) gefüllter Hohlkörper (61) ist.

5. Behälter nach einem oder mehreren der Ansprüche 1 bis 3, dadurch gekennzeichnet, daß das Preßgewicht ein Stein ist.

6. Behälter nach einem oder mehreren der Ansprüche 1 bis 5, dadurch gekennzeichnet, daß das Preßgewicht (60) mittels Seilen (53) in den Maischeraum (30) absenkbar ist.

7. Behälter nach Anspruch 6, dadurch gekennzeichnet, daß in den Seilen (53) ein Kraftsensor (55) angeordnet ist.

8. Behälter nach Anspruch 6 oder 7, dadurch gekennzeichnet, daß die Seile (53) durch Öffnungen (56) eines Deckels (18) des Behälters (10) laufen.

9. Behälter nach Anspruch 8, dadurch gekennzeichnet, daß in den Seilen (53) Mitnehmer (57) angeordnet sind, deren Querschnitt größer als der Querschnitt der Öffnungen (56) ist.

10. Behälter nach Anspruch 8 oder 9, dadurch gekennzeichnet, daS die Seile (53) in den Öffnungen (56) im wesentlichen gasdicht geführt sind.

11. Verfahren zum Behandeln von Maische, bei dem die Maische (71) in einen Behälter (10) mit einem Maischeraum (30) und mindestens einem von dem Maischeraum (30) mittels eines Siebes (21, 26) getrennten Saftraum (23, 28) eingefüllt wird, wobei das Sieb (21, 26) im wesentlichen vertikal angeordnet und der Maischeraum (30) zylindrisch ausgebildet ist, dadurch gekennzeichnet, daß ein schweres Preßgewicht (60), dessen horizontaler Querschnitt im wesentlichen dem horizontalen Querschnitt des Maischeraumes (30) entspricht, lose in den Maischeraum (30) in vertikaler Richtung (80; 85; 90) eingefahren wird.

12. Verfahren nach Anspruch 11, dadurch gekennzeichnet, daß während des Einfahrens die Saftkammer (23, 28) entleert wird.

13. Verfahren nach Anspruch 11, dadurch gekennzeichnet, daß bei nicht-entleerter Saftkammer (23, 28) das Preßgewicht (60) so weit in den Maischeraum (30) eingefahren wird, daß seine Unterseite (83) sich unterhalb des Spiegels (76) der eingefüllten Maische (70) befindet.

14. Verfahren nach Anspruch 11, dadurch gekennzeichnet, daß bei nicht-entleerter Saftkammer (23, 28) das Preßgewicht (60) zunächst eingefahren (85) und dann wieder ausgefahren (90) wird.
